# EUROPEAN PATENT APPLICATION

(11) **EP 3 073 753 A1**
(43) Date of publication of application: **28.09.2016**
(21) Application number: 14864787.8
(22) Date of filing: 12.11.2014
(51) Int. Cl.: H04N 21/472, H04N 21/6587, H04N 21/239, G11B 27/00

(54) **SMART TV MEDIA PLAYER AND PLAYBACK PROGRESS ADJUSTMENT METHOD THEREOF, AND SMART TV**

(30) Priority: 21.11.2013 CN 201310588973
(71) Applicant: Le Shi Zhi Xin Electronic Technology (Tianjin) Limited, Beijing 100025 (CN)
(72) Inventor: HUANG, Peng, Beijing 100025 (CN); TIAN, Jiazi, Beijing 100025 (CN); TONG, Yonghui, Beijing 100025 (CN)
(74) Representative: Cohausz & Florack
(86) International application number: PCT/CN2014/090914
(87) International publication number: WO 2015/074508

(57) **Abstract**

The present application provides a smart TV media player and a playback progress adjustment method thereof, and a smart TV, the method comprising: during the playback of a current video file, receiving a playback progress adjustment request sent from a user by pressing a specific key on a control terminal; acquiring the time length of the current video file and the length of time when the specific key is pressed; eon the basis of the time length of the current video file, the length of time when the specific key is pressed and a preset corresponding relationship table, determining the adjustment step size of the playback progress; and on the basis of the adjustment step size, adjusting the playback progress of the current video file. The present application determines the adjustment step size on the basis of the attributes of the played video file itself and the dynamic control parameters inputted by a user, and can effectively solve the problem of poor effect in fast forward and rewind of existing smart TV video players.

## Description

### Field

The present application relates to the field of playing media on a smart TV and particularly to a media player of a smart TV and a method for adjusting the playback progress thereof, and a smart TV.

### Background

A Smart TV is a kind of smart multimedia terminals emerging along with the trend of "high-definition", "network-enabled", and "smart" TV capable of retrieving programs from the Internet, video devices, computers, and a number of channels, and presenting contents desirable to consumers clearly on a large screen via a simple and easy-to-use integrated operational interface. As compared with application platforms of traditional TVs, the smart TVs can be provided with various application services including searching over the Internet, online TVs, Video on Demand (VOD), digital music, online news, video calling over the Internet, etc. The TVs are becoming the third kind of information access terminals following the computers and the cellphones, so that the users can access their desirable information at any time. The smart TVs like the smart phones are provided with a fully open platform and carry an operating system (e.g. the Android system), so that the users themselves can install and uninstall software, game, and other program available from third-party service providers to constantly extend the functions of the TVs so as to keep on enriching personalized experiences of the users.

A media player of a smart TV is a device capable of playing Internet streaming media, and local audio and video files on a TV, which can download and play audio and video files, search for audios and videos over the Internet, make comments on videos, etc., so that resources over the Internet can be shared perfectly with the whole family for a wonderful and joyful time. Fast Forward and Fast Backward are important and common functions on the media player of the smart TV, and since a TV remote controller is not convenient to operate by dragging a progress bar, the Fast Forward and Fast Backward functions are generally enabled in the following two modes:

In the functional button control mode, the <Fast Forward>/<Fast Backward> functional buttons are pressed once to enter the twice-speed (2x) Fast Forward/Fast Backward play mode, and pressed for a long period of time or clicked on consecutively for a number of times to enter the four-time speed (4x), eight-time speed (8x), sixteen-time speed (16x), thirty two-time speed (32x), etc., Fast Forward/Fast Backward play mode, while an audio is stopped from being played; and if the <Play> functional button is clicked on again, then the normal-speed play mode is resumed, while the audio continues with being played from the current play position. However this mode is disadvantageous in that the Fast Forward/Fast Backward speed is only fixed at 2x, 4x, 8x, 16x, 32x, etc., and if a video being played, particularly the remainder thereof, lasts for a short period of time, then a point of time desirable to a watching user may be easily skipped, thus degrading a satisfactory Fast Forward/Fast Backward effect.

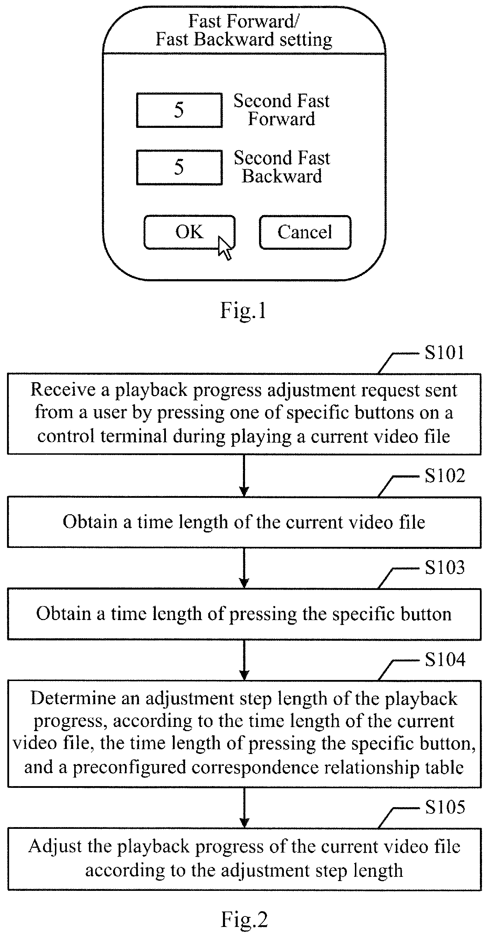

In the Fast Forward/Fast Backward step setting mode, as illustrated in Fig.1, the user needs to preset a Fast Forward step and a Fast Backward step, and if the user clicks on the Fast Forward/Fast Backward functional button, then the player will jump at the preset step (e.g., 5 seconds, 30 seconds, 5 minutes, etc.) to the next point of time for playing. This mode is similar to dragging the progression bar, but can avoid random dragging because the user can move fast forward or backward step by step to the desirable point of time. However this mode may also be limited in that (1) the user has to move fast forward or backward the video manually step by step, which may be troublesome because each step is time-consuming, thus limiting the Fast Forward/Fast Backward speed; and (2) although each Fast Forward/Fast Backward step can be set, the step will be fixed throughout the Fast Forward/Fast Backward process, and if the video being played, particularly the remainder thereof, lasts for a short period of time, then the point of time desirable to the watching user may be easily skipped; and if the video being played, particularly the remainder thereof, lasts for a long period of time, then it will take a long period of time to jump to the point of time desirable to the user, thus degrading a satisfactory Fast Forward/Fast Backward effect.

### Summary

A method for adjusting a playback progress of a media player of a smart TV is intended to address the problem of a poor Fast Forward/Fast Backward effect of the existing media player of the smart TV.

A smart TV and a media player thereof are intended to enable the method above to be applicable in practice.

There is a method for adjusting the playback progress of a media player of a smart TV, the method including: receiving a playback progress adjustment request sent from a user by pressing a specific button on a control terminal during playing of a current video file, wherein the playback progress adjustment request includes a Fast Forward request and a Fast Backward request; obtaining a time length of the current video file, and a time length of pressing the specific button; determining an adjustment step length of the playback progress, according to the time length of the current video file, the time length of pressing the specific functional button, and a preconfigured correspondence relationship table, wherein the correspondence relationship table includes a correspondence relationship between a time interval of a video file, a time interval of pressing a specific button, and an adjustment step length, and a different combination of a time interval of a video file, and a time interval of pressing a specific button corresponds to a different adjustment step length; and adjusting the playback progress of the current video file according to the adjustment step length.

There is a computer readable recording medium on which a program for performing the method above is recorded.

Preferably the obtaining the time length of pressing the specific button includes: starting timing upon reception of a signal that the specific button is pressed; and determining the time length of pressing the specific button, according to a result of timing.

Preferably the method further includes: pausing playing of the current video file upon reception of the signal that the specific button is pressed; and reading subsequent frames of video data at a normal speed, and decoding and displaying the subsequent frames of video data, upon reception of a signal the specific button is released.

Preferably the method further includes: if the time length of the current video file is below a preset threshold, then adjusting the playback progress of the current video file according to a fixed adjustment step length.

Preferably the adjusting the playback progress of the current video file according to the adjustment step length includes: determining an offset address of a next frame of video data according to the current play position, and the adjustment step length; reading the target frame of video data at the offset address of the current video file; decoding and displaying the target frame of video data; and repeating the respective steps above until an adjustment stop instruction is received.

Preferably before the target frame of video data is decoded and displayed, the method further includes: determining whether the target frame of video data is a key frame; and if not, then for the Fast Forward request, reading again a frame of data following the current target frame of video data until the read frame of video data is a key frame or the end of the video file is reached, and for the Fast Backward request, reading again a frame of data preceding the current target frame of video data until the read frame of video data is a key frame or the start of the video file is reached.

Preferably the time length of the current video file is a total or remaining time length of the current video file; and for the Fast Forward request, the remaining time length refers to a time length from the current play position to the end of the video file, and for the Fast Backward request, the remaining time length refers to a time length from the current play position to the start of the video file.

There is a media player of a smart TV, the media player including: a user request receiving module configured to receive a playback progress adjustment request sent from a user by pressing a specific button on a control terminal during playing of a current video file, wherein the playback progress adjustment request includes a Fast Forward request and a Fast Backward request; a file length obtaining module configured to obtain a time length of the current video file; a button press time obtaining module configured to obtain a time length of pressing the specific button; a step length determining module configured to determine an adjustment step length of the playback progress, according to the time length of the current video file, the time length of pressing the specific functional button, and a preconfigured correspondence relationship table in which a correspondence relationship between a time interval of a video file, a time interval of pressing a specific button, and an adjustment step length is stored, wherein a different combination of a time interval of a video file, and a time interval of pressing a specific button corresponds to a different adjustment step length; and a progress adjusting module configured to adjust the playback progress of the current video file according to the adjustment step length determined by the step length determining module.

Preferably the media player further includes: a video playing module configured to pause playing of the current video file upon reception of the playback progress adjustment request sent from the user by pressing the specific button on the control terminal; and to read subsequent frames of video data at a normal speed, and to decode and display the subsequent frames of video data, upon reception of an adjustment stop request sent from the user by releasing the specific button on the control terminal.

There is a smart TV including the media player above of a smart TV.

The embodiments of the application have the following advantages over the prior art:

With the preferred embodiments of the application, the playback progress of the video file can be adjusted rapidly and accurately to thereby address in effect the problem of a poor Fast Forward/Fast Backward effect, which may arise from adjusting the play speed at a fixed step length in the video player of the smart TV.

### Brief Description of the Drawings

Fig.1 is a Fast Forward/Fast Backward time setting interface in the existing media player;
Fig.2 is a flow chart of an embodiment of a method for adjusting the playback progress in a media player of a smart TV according to the application;
Fig.3-1 is a particular flow chart of the step S104 for a playback progress adjustment request, which is a Fast Forward request, in the embodiment of the application illustrated in Fig.2;
Fig.3-2 is a particular flow chart of the step S104 for a playback progress adjustment request, which is a Fast Backward request, in the embodiment of the application illustrated in Fig.2;
Fig.4 is a schematic structural diagram of a first embodiment of a media player of a smart TV according to the application; and
Fig.5 is a schematic structural diagram of a second embodiment of a media player of a smart TV according to the application.

### Detailed Description of the Embodiments

In order to make the objects, features, and advantages above of the application more apparent and readily understood, the application will be described below in further details with reference to the drawings and particular embodiments thereof.

### Method Embodiment:

Referring to Fig.2, there is illustrated a flow chart of an embodiment of a method for adjusting the playback progress in a media player of a smart TV according to the application, where the method particularly includes the following steps:
The step S101: receive a playback progress adjustment request sent from a user by pressing one of specific buttons on a control terminal during playing of a current video file;
   In this preferred embodiment, the playback progress adjustment request includes a Fast Forward request and a Fast Backward request, and the corresponding specific buttons are the <Fast Forward> functional button and the <Fast Backward> functional button respectively on the control terminal (e.g., a TV remote controller).
   Moreover in this preferred embodiment, in order to improve the fluency of adjusting the playback progress, the current video file is paused from being played, upon reception of a signal that one of the specific buttons is pressed.
The step S102: obtain a time length of the current video file;
   In this preferred embodiment, the time length of the video file can be a total time length of the video file, or can be a remaining time length of the video file; and for the Fast Forward request, the remaining time length refers to a time length from the current play position to the end of the video file, and for the Fast Backward request, the remaining time length refers to a time length from the current play position to the start of the video file.
The step S103: obtain a time length of pressing the specific functional button;
   The time length of pressing the specific button can be obtained in this preferred embodiment by: starting timing upon reception of the signal that the specific button is pressed, and determining the time length of pressing the specific button, according to a result of the timing.
The step S104: determine an adjustment step length of the playback progress, according to the time length of the current video file, the time length of pressing the specific button, and a preconfigured correspondence relationship table;
   Here a correspondence relationship between a time interval of a video file, a time interval of pressing a specific button and an adjustment step length is stored in the correspondence relationship table, where a different combination of a time interval of a video file, and a time interval of pressing the specific button corresponds to a different adjustment step length;
   The correspondence relationship table can be preset empirically by those skilled in the art, and can be adjusted dynamically by a user as required over time.

In this preferred embodiment, in order to ensure the accuracy of adjusting the playback progress of the video file with a short time length, the longest adjustment step length can be defined, particularly as follows: if the time length of the current video file is below a preset threshold (e.g., 15 minutes), then the playback progress of the current video file may be adjusted at a fixed adjustment step length.

For the sake of convenient understanding, a particular example will be depicted in Table 1 below.

**Table 1 A correspondence relationship table between a time length of a video file, a time interval of pressing the specific button, and an adjustment step length**

| A time interval of a video file (in minutes) | A time interval of pressing the specific button (in seconds) | An adjustment step length (in seconds) |
|---|---|---|
| <15 | >3 | 30 |
| 15∼90 | 3∼5 | 30 |
| | 5+∼10 | 60 |
| | 10+∼15 | 90 |
| | >15 | 120 |
| >90 | 3∼5 | 30 |
| | 5+∼10 | 60 |
| | 10+∼15 | 90 |
| | 15+∼20 | 120 |
| | 20+∼25 | 150 |
| | 25+∼30 | 180 |
| | 30+∼35 | 210 |
| | 35+∼40 | 240 |
| | 40+∼45 | 270 |
| | >45 | 300 |

In Table 1 above, "+" indicates that the boundary number is precluded from the corresponding interval, for example ,"5+∼10" represents an interval the range of which is more than 5 and less than or equal to 10.

The step S105: adjust the playback progress of the current video file according to the adjustment step length above.

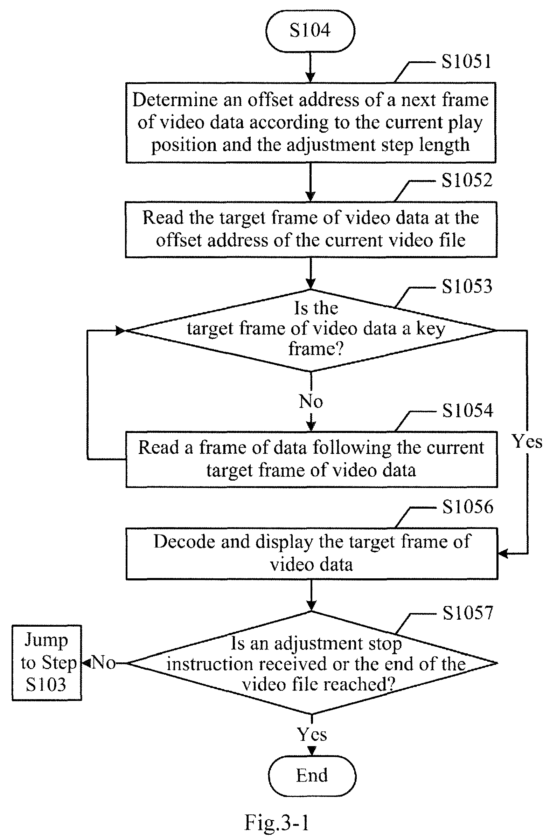

The method above for adjusting the playback progress of a current video file according to the adjustment step length will be described below in details taking a Fast Forward request and a Fast Backward request respectively as examples:
Referring to Fig.3-1, there is illustrated a particular flow chart of the method above for adjusting the playback progress of a current video file according to an adjustment step length if the playback progress adjustment request is a Fast Forward request, where the method includes the following steps:
   The step S1051: determine an offset address of a next frame of video data according to the current play position and the adjustment step length above;

The file starts to be played, by starting a play file handler pointing to the current play position, and determining a video file data length (datalen) corresponding to the adjustment step length according to the adjustment step length, where: the offset address of the next frame of video data = handler + datalen.

For example, if the user makes a Fast Forward request when the video file is played at "00:00:01", then the system can determine the offset address of the next frame of video data as "683199" according to the file offset position of "19239" to which the file handler points, and the video file data length of "663960" corresponding to the adjustment step length above of "30 seconds", upon reception of the Fast Forward request.

The step S1052: read the target frame of video data at the offset address of the current video file.

After the target frame of data is read, the play file handler is moved to the offset address.

The step S1053: determine whether the target frame of video data is a key frame, and if so, then the flow jumps to the step S1056; otherwise, the flow jumps to the step S1054.

Video frames of the video file include key frames and transition frames. The key frame (an I frame) includes a full set of digital image information which can be decoded separately, and the transition frame can only be decoded correctly by calculating the correlation with respect to a previous frame (a predication frame, or P frame for short) or the previous frame and the next frame (bidirectional predication frames, or B frames for short). The video file data are temporally arranged generally as follows: IBBPBBIBBPBB...... Since the transition frames can not be decoded separately, a mosaic picture will be seen by the user. With the application, in order to ensure a visual effect, the transition frames are skipped so that a full picture will be seen by the user.

The step S1054: read a frame of data following the current target frame of video data; and the flow jumps to the step S1053;
The frame of data following the current target frame of video data refers to a frame of data closer to the end of the video file. In this step, if the following frame of data is a last frame of data of the video file, then the process of adjusting the playback progress will be terminated directly.

The step S1056: decode and display the target frame of video data above.

The step S1057: determine whether an adjustment stop instruction is received or the end of the video file is reached, and if so, then the process of adjusting the playback progress will be terminated; otherwise, the flow jumps to the step S103 to repeat the process of adjusting the playback progress.

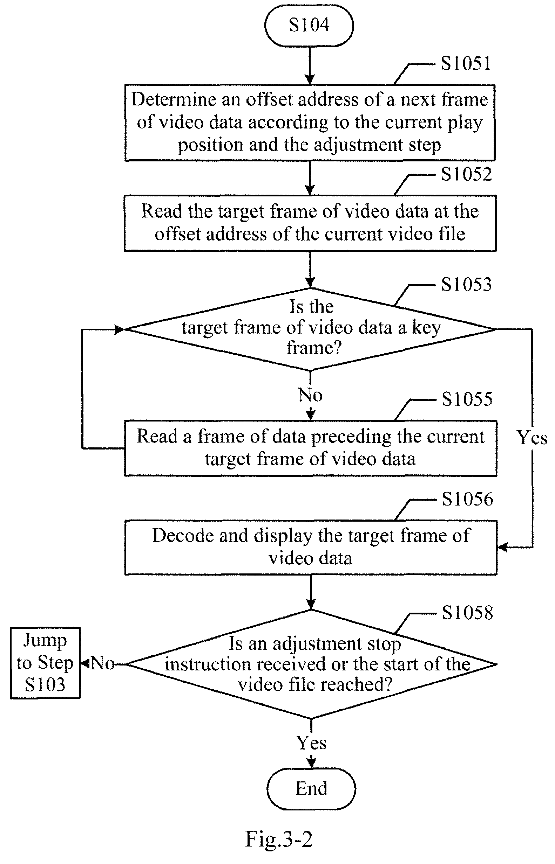

Referring to Fig.3-2, there is illustrated a particular flow chart of the method above for adjusting the playback progress of a current video file at an adjustment step if the playback progress adjustment request is a Fast Backward request, where the method is different from the Fast Forward method above in that the steps S1054 and S1057 are replaced respectively with S1055 and S1058, where:
The step S1055: read a frame of data preceding the current target frame of video data; and the flow jumps to the step S1053;

The frame of data preceding the current target frame of video data refers to a frame of data closer to the start of the video file. In this step, if the preceding frame of data is the first frame of data of the video file, then the process of adjusting the playback progress will be terminated directly.

The step S1058: determine whether an adjustment stop instruction is received or the start of the video file is reached, and if so, then the process of adjusting the playback progress will be terminated; otherwise, the flow jumps to the step S103 to repeat the process of adjusting the playback progress.

In the embodiment of the method above, the process of adjusting the playback progress starts with a specific button being pressed and ends with the specific button being released. Upon reception of the adjustment stop instruction, subsequent frames of video data are read, decoded and displayed at a normal speed (that is, the flow jumps to a normal video play process). If the playback progress is adjusted to the end of the file, then the video play process will be terminated together with the process of adjusting the playback progress.

In the solution according to the embodiment above, the user can control the playback progress by pressing and holding one of the specific buttons to thereby well address the problem that it may not be convenient for the user to operate the media player of the smart TV in a low-luminance environment while watching the video file using the media player, so that the user can adjust the playback progress conveniently even in a poor operating environment. However the application will not be limited to this embodiment, but can alternatively be embodied, for example, as follows:
The time length of pressing the button can be determined by sending the playback progress adjustment request through pressing the specific button (e.g., the <Fast Forward> or <Fast Backward> functional button), timing the time length of pressing the button starting when the specific button is pressed and ending when the specific button is released, and determining the time length between the start of timing and the end of timing as the time length of pressing the button; the adjustment stop instruction is ascertained by pressing another functional button (e.g., the <Stop> or <Play> functional button) to terminate the adjustment of the playback progress; and the progress is adjusted cyclically by jumping to the step S1051 to repeat the playback progress adjustment process, if no adjustment stop instruction is received and the end of the file (or the start of the file) is not reached in the steps S1057 and S1058. This alternative solution is different from the solution above in that the Fast Forward/Fast Backward operation is performed at a single adjustment step in the alternative solution, while an increasing adjustment step (until the adjustment step threshold is reached) is performed in the solution above.

Moreover for the sake of conciseness, the respective embodiments of the method above have been described as a series of actions in combination, but those skilled in the art shall appreciate that the application will not be limited to the described order of the actions because some of the steps can be performed in another order or concurrently without departing from the spirit of the application; and secondly those skilled in the art shall also appreciate that the respective embodiments of the method above are preferred embodiments, and the actions and the modules involved in the respective embodiments may not be necessary to the application.

An embodiment of the application further discloses a computer readable recording medium on which a program for performing the method above is recorded. The computer readable recording medium includes any mechanism configured to store or transport computer (just as an example) readable information. For example the machine readable medium includes a Read Only Memory (ROM), a Random Access Memory (RAM), a magnetic disk storage medium, an optical storage medium, a flash memory medium, an electric, optical, acoustic or another form of propagated signal (e.g., a carrier wave, an infrared signal, a digital signal, etc.), etc.

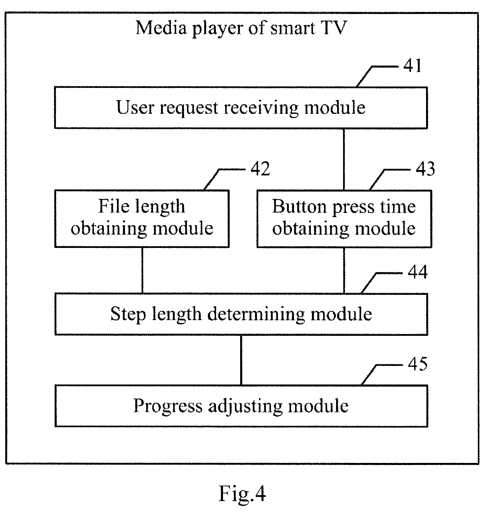

Referring to Fig.4, there is illustrated a structural block diagram of a first embodiment of a media player of a smart TV according to the application, where if a play position of a video being played needs to be relocated, then a Fast Forward/Fast Backward step can be determined according to the length of the video file, and a time length of pressing the Fast Forward/Fast Backward button by a user, to thereby address the problem that the play position of the video file can not be adjusted rapidly and accurately because the existing media player of the smart TV can not adjust the Fast Forward/Fast Backward speed as per the attribute of the video file itself to be played and the control by the user.

A user request receiving module 41 is configured to receive a playback progress adjustment request sent from a user by pressing one of specific buttons on a control terminal, during playing of a current video file;
The playback progress adjustment request includes a Fast Forward request and a Fast Backward request, and the corresponding specific buttons are the <Fast Forward> button and the <Fast Backward> button respectively on the control terminal.
A file length obtaining module 42 is configured to obtain a time length of the current video file;
The time length of the video file can be a total time length of the video file, or can be a remaining time length of the video file, where the total time length of the video file can be obtained from an attribute of the video file, and the remaining time length of the video file can be calculated from the total time length of the video file and the current play position.

A button press time obtaining module 43 is configured to obtain a time length of pressing the specific button;
A step length determining module 44 is configured to determine an adjustment step length of the playback progress, according to the time length of the current video file, the time length of pressing the specific functional button, and a preconfigured correspondence relationship table;
Where:
A correspondence relationship between a time interval of a video file, a time interval of pressing a specific button, and an adjustment step length is stored in the correspondence relationship table, where a different combination of a time interval of a video file, and a time interval of pressing a specific button corresponds to a different adjustment step length; and
If the time length of the current video file is below a preset threshold, to adjust the playback progress of the current video file according to a fixed adjustment step length; and
The progress adjusting module 45 is configured to adjust the playback progress of the current video file according to the adjustment step length determined by the step length determining module 44.

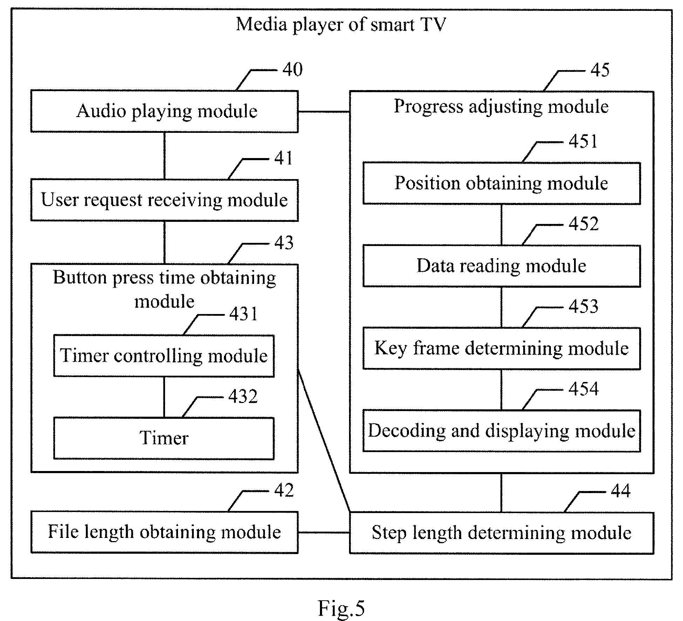

Referring to Fig.5, there is illustrated a structural block diagram of a second embodiment of a media player of a smart TV according to the application, which includes a video playing module 40 in addition to the user request receiving module 41, the file length obtaining module 42, the button press time obtaining module 43, the step length determining module 44, and the progress adjusting module 45 included in the first embodiment of the apparatus, where:
The video playing module 40 is configured to pause or continue with playing of the video file played by the user; and in order to improve the fluency of adjusting the play position of the video, if the user request receiving module 41 receives the Fast Forward/Fast Backward request of the user (e.g., if the system receives a signal that the specific button is pressed), then the video playing module 40 is configured to pause the video from being currently played; and if the progress adjusting module 45 terminates the process of adjusting the play position of the video (if the system receives a signal that the specific button is released), read subsequent frames of video data at a normal speed, and decode and display the subsequent frames of video data until playing of the video is terminated.

In this preferred embodiment, the button press time obtaining module 43 particularly includes a timer controlling sub-module 431 and a timer 432, where:
The timer controlling sub-module 431 is configured to control the timer 432 to measure the time length of pressing the specific button, by controlling the counter 432 to start timing upon reception of a signal that the specific button is pressed.

The timer 432 is configured to measure the time length of pressing the specific button, in response to a timing start instruction issued by the timer controlling sub-module 431.

The progress adjusting module 45 particularly includes a position obtaining sub-module 451, a data reading sub-module 452, a key frame determining sub-module 453, and a decoding and displaying module 454, where:
The position obtaining sub-module 451 is configured to determine an offset address of a next frame of video data according to the current play position, and the adjustment step length determined by the step length determining module 44, where:
   For a Fast Forward request, the offset address of the next frame of video data = the current play position + a data length corresponding to the adjust step length; and
   For a Fast Backward request, the offset address of the next frame of video data = the current play position - a data length corresponding to the adjust step length;
   The data reading sub-module 452 is configured to read the target frame of video data at the offset address of the current video file;
   The key frame determining sub-module 453 is configured to determine whether the target frame of video data is a key frame; and if not, for the Fast Forward request, read again a frame of data following the current target frame of video data (i.e., a frame data closer to the end of the video file) until the read frame of video data is a key frame or the end of the video file is reached, and for the Fast Backward request, read again a frame of data preceding the current target frame of video data (i.e., a frame of data closer to the start of the video file) until the read frame of video data is a key frame or the start of the video file is reached; and
   The decoding and displaying sub-module 454 is configured to decode and display the target frame of video data.

Moreover an embodiment of the application further discloses a smart TV including the media player above, where if a play position of a video file needs to be relocated, then a Fast Forward/Fast Backward step can be determined according to a time length of pressing the Fast Forward/Fast Backward button, and the time length of the current video file (the total or remaining time length of the current video file), to thereby locate rapidly and accurately a new play position; and the smart TV can be configured with:
An operating system which is the Android system 4.0 or above;
A primary chip which is an integrated smart TV primary chip with a dominant frequency of higher than 800MHz in the ARM architecture with a DSP (a video hard decoder);
A memory which is DDR2 of higher than 256MB;
An internal storage device which is an NAND flash memory or an EMC flash memory with a capacity of more than 2G;
An external device interface which includes at least four USB ports connectable to a USB drive, a mobile disk, a keyboard, a mouse, a wireless keyboard and mouse receiver, a WIFI wireless network card, a game joystick, etc.;
A remote controller which includes at least the Upward, Downward, Leftward, Rightward, OK, Return, Menu, digits 0 to 9, Home, and other buttons; and
A liquid crystal screen with a resolution of higher than 1280*720.

It shall be noted that the embodiments above of the device are preferred embodiments, and the modules involved therein may not be necessary to the application.

The respective embodiments in the description have been described progressively, and each of the embodiments has been focused on its differences from the other embodiments, so the description of their commonalities can be applied to each other. Since the embodiments of the device are substantially similar to the embodiments of the method, the embodiments of the device have been described in brief, and reference can be made to the description of the embodiments of the method for details of the embodiments of the device.

A media player of a smart TV and method for adjusting the playback progress thereof, and a smart TV including the same according to the embodiments of the application have been described in details above, and the principle and the embodiments of the application have been set forth in this context by way of particular examples, so the embodiments have been described above merely for the purpose of facilitating understanding of the method according to the application and the core idea thereof; and also those ordinarily skilled in the art can make the particular embodiments and their application scopes without departing from the spirit of the application. Accordingly the disclosure of this description shall not be construed as limiting the scope of the application.

## Claims

1. A method for adjusting a playback progress of a media player of a smart TV, the method comprising:
receiving a playback progress adjustment request sent from a user by pressing a specific button on a control terminal during playing of a current video file, wherein the playback progress adjustment request comprises a Fast Forward request and a Fast Backward request;
obtaining a time length of the current video file, and a time length of pressing the specific button;
determining an adjustment step length of the playback progress according to the time length of the current video file, the time length of pressing the specific functional button and a preconfigured correspondence relationship table, wherein the correspondence relationship table comprises a correspondence relationship between a time interval of a video file, a time interval of pressing the specific button, and an adjustment step length, and a different combination of the time interval of a video file and the time interval of pressing the specific button corresponds to a different adjustment step length; and
adjusting the playback progress of the current video file according to the adjustment step length.

2. The method for adjusting the playback progress of a media player of a smart TV according to claim 1, wherein the obtaining the time length of pressing the specific button comprises:
starting timing upon reception of a signal that the specific button is pressed; and
determining the time length of pressing the specific button, according to a result of timing.

3. The method for adjusting the playback progress of a media player of a smart TV according to claim 2, further comprising:
pausing playing of the current video file upon reception of the signal that the specific button is pressed; and
reading subsequent frames of video data at a normal speed, and decoding and displaying the subsequent frames of video data, upon reception of a signal that the specific button is released.

4. The method for adjusting the playback progress of a media player of a smart TV according to claim 1, further comprising:
if the time length of the current video file is shorter than a preset threshold, then adjusting the playback progress of the current video file at a fixed adjustment step length.

5. The method for adjusting the playback progress of a media player of a smart TV according to claim 1, wherein the adjusting the playback progress of the current video file according to the adjustment step length comprises:
determining an offset address of a next frame of video data according to the current playing position, and the adjustment step length;
reading the target frame of video data at the offset address of the current video file;
decoding and displaying the target frame of video data; and
repeating the respective steps above until an adjustment stop instruction is received.

6. The method for adjusting the playback progress of a media player of a smart TV according to claim 5, wherein before the target frame of video data is decoded and displayed, the method further comprises:
determining whether the target frame of video data is a key frame; and
if the target frame of video data is not the key frame, then for the Fast Forward request, reading again a frame of data following the target frame of video data until the read frame of video data is a key frame or the end of the video file is reached, and for the Fast Backward request, reading again a frame of data preceding the target frame of video data until the read frame of video data is a key frame or the start of the video file is reached.

7. The method for adjusting the playback progress of a media player of a smart TV according to any one of claims 1 to 6, wherein the time length of the current video file is a total or remaining time length of the video file; and for the Fast Forward request, the remaining time length refers to a time length from the current play position to the end of the video file, and for the Fast Backward request, the remaining time length refers to a time length from the current play position to the start of the video file.

8. A media player of a smart TV, the media player comprising:
a user request receiving module configured to receive a playback progress adjustment request sent by a user by pressing a specific button on a control terminal during playing of a current video file, wherein the playback progress adjustment request comprises a Fast Forward request and a Fast Backward request;
a file length obtaining module configured to obtain a time length of the current video file;
a button press time obtaining module configured to obtain a time length of the pressing the specific button;
a step length determining module configured to determine an adjustment step length of the playback progress, according to the time length of the current video file, the time length of pressing the specific button, and a preconfigured correspondence relationship table, wherein the correspondence relationship table comprises a correspondence relationship between a time interval of a video file, a time interval of pressing the specific button and an adjustment step length, and a different combination of the time interval of a video tile and the time interval of the pressing the specific button corresponds to a different adjustment step length; and
a progress adjusting module configured to adjust the playback progress of the current video file according to the adjustment step length determined by the step length determining module.

9. The media player of a smart TV according to claim 5, further comprising:
a video playing module configured to pause playing of the current video file upon reception of the playback progress adjustment request sent from the user by pressing the specific button on the control terminal; and to read subsequent frames of video data at a normal speed, and to decode and display the subsequent frames of video data, upon reception of an adjustment stop request sent from the user by releasing the specific button on the control terminal.

10. A TV, comprising the media player of a smart TV according to claim 8 or 9.

11. A computer readable recording medium, on which a program for performing the method according to claim 1 is recorded.
